# EUROPEAN PATENT SPECIFICATION

(11) **EP 3 649 030 B1**
(45) Date of publication and mention of the grant of the patent: **11.08.2021**
(21) Application number: 18740912.3
(22) Date of filing: 28.06.2018
(51) Int. Cl.: B61B 13/04, B62D 1/26, E01B 25/28

(54) **TRANSPORTATION SYSTEM FOR PEOPLE AND/OR THINGS**
TRANSPORTSYSTEM FÜR PERSONEN UND/ODER DINGE
SYSTÈME DE TRANSPORT POUR PERSONNES ET/OU OBJETS

(30) Priority: 03.07.2017 IT 201700074256
(43) Date of publication of application: 13.05.2020
(73) Proprietor: Sem Srl, 35131 Padova (IT)
(72) Inventor: MOTTI, Massimo, 35121 Padova (IT)
(74) Representative: Vinci, Marcello
(86) International application number: PCT/IB2018/054788
(87) International publication number: WO 2019/008476

(56) References cited:
- WO-A1-2011/045446
- WO-A1-2015/150885
- US-A- 2 737 902
- US-A- 3 822 648
- US-A- 4 132 175
- US-A1- 2007 124 035

## Description

This patent is related to transportation systems for people and/or things and in particular concerns a new transportation system for people and/or things, which uses electric vehicles that travel on non-electrified rails.

Various systems to transport goods and/or people using small vehicles that run on rails are already known in the prior art.

The need to transport people in very large places or spaces, but without using common motorized vehicles which increase traffic and increase atmospheric and acoustic pollution, is well known. The high number of vehicles in fact leads to a slowing down of circulation, which becomes discontinuous, as well as the risk of accidents and collisions between the vehicles themselves.

For example, tourist resorts are frequented by people who, not knowing the topography of the place, struggle and are uncomfortable circulating with their own vehicles and prefer to use paid public transport, such as buses, taxis, and so on.

There are also very large places, such as airports, or locations where precise restrictions prohibit the use of private vehicles. Here people must travel on foot or according to the methods offered, for example using moving walkways or shuttles.

These transportation systems, in particular moving walkways, have obligatory routes, which do not include intermediate stops except those which are pre-established. In addition, particularly with regard to shuttles and buses, they are designed to accommodate many people all together, but in this case the user cannot enjoy a quiet trip and also the bus or shuttle must stop whenever a user has to get on or off at an intermediate stop.

The document CA0277221 concerns a transportation system that includes a rail with a central groove in which a shank constrained to a vehicle slides. The system also comprises a vehicle configured to travel both on the roadway and on the rail, this vehicle comprising a vehicle structure supported by a plurality of wheels. The shank is mounted on the structure and can shift from a retracted position to an extended position, and wherein a drive wheel is mounted at the end of the shank which is suited to engage in the groove of the rail to guide the vehicle along the rail itself. The vehicle can operate in two ways: in the road transit mode the vehicle operates its own drive wheels, while in the transit mode on the rail, the vehicle activates the drive wheel. An on-board computer controls the vehicle's movement on the rail.

US7652629 relates to a transportation system for vehicles, comprising a plurality of lane segments suited to be juxtaposed with each other to form a lane for wheeled vehicles. Each segment comprises two box-shaped and hollow tracks, inside which the cables for the electric power supply of the vehicles are housed.

US2011/0196561 concerns an electric powered transportation network with customized vehicles that can automatically transport passengers. The vehicles travel on two continuous concrete strips, in turn equipped with electrical conductors. The vehicles are in turn equipped with electrical contacts for the electrical connection with the strip conductors, through which the vehicles are powered.

US4132175 relates to a transportation vehicle comprising support wheels and a guide wheel inserted in a guide beam that protrudes from the road. These support wheels run on raised tracks with respect to the road surface, so that between the two tracks a wide depression is formed having a width equal to the distance between the wheels. This document also suggests the need to use two side-by-side guide members that run on both sides of the guide itself for stability. The system structured in this way cannot therefore be constructed on road surfaces normally used by other vehicles, such as bicycles, motorbikes, or motor vehicles.

US3822648 relates to a guiding system for computer controlled vehicles, comprising a flat track guide-way and a guide channel beneath the track surface. This system is also not suitable to be built on just any road level, like a normal road or a cycle path, but on a specially dedicated rail.

WO2011/045446 relates to a kind of sensing assembly, to be installed frontally on the vehicle to be driven, and where the assembly comprises a guide unit suited to be inserted in a rail. The guide unit follows the rail and moves such that the information related to curvature of the rail is transmitted through mechanical and/or electronic means to the wheels of the vehicle. This guide unit must therefore necessarily be installed in front of the vehicle, and in particular in front of the steering axle of the front wheels of the vehicle, so as to be able to promptly modify the position of the vehicle's drive wheels. Moreover, the guide unit shown in this document is pressed by a spring to slide against the bottom of the rail, where various types of debris accumulate, which may hinder or even prevent the normal forward movement of the guide unit itself.

US2007/124035 relates to a traffic system where the vehicles are equipped with wheels that run on driving bridges raised with respect to the road surface and a steering device that slides on the road surface.

The object of the present patent is a new type of transportation system for people which uses electric vehicles that travel constrained to rails.

The main object of the present invention is to make the transportation system installable on any type of pre-existing or dedicated road surface, where other types of vehicles such as bicycles, motor vehicles or motorbikes can circulate, without impeding the circulation by any other means of transport once the rail is installed.

Another important object of the present invention is to minimize the construction works necessary for its installation on existing road structures and consequently to have very low costs and production times.

Yet another important object of the present invention is to enable the autonomous driving of each vehicle, which is autonomously powered, and which always remains constrained to the rails.

Still another object of the present invention is that it can be installed in any environment or location, where it is advantageous to eliminate or reduce private vehicle traffic on the road.

A further object of the present invention is to reduce the risk of collisions between vehicles, since the latter circulate constrained to rails and are also equipped with a control system to monitor their mutual positions.

Another object of the present invention is to make the rail system structurally simpler in that it does not supply the power to the vehicles which are autonomously powered.

Still another object of the present invention is to ensure the maximum safety of the rail system since, thanks to the devices described and claimed below, the dirt and debris along the rail is minimized, and the correct positioning of the guide unit inside the rail is guaranteed. In addition, the invention provides for the maximum safety even for other road users (pedestrians, cyclists, vehicles in general and animals) where the transport system described in the present patent is installed.

A further object of the present invention is that the system ensures maximum safety for passengers on board and for people in the vicinity of the vehicle, since it is impossible for the vehicle to derail and/or overturn.

One advantage of the present invention is that it does not involve polluting or acoustic emissions while the vehicles are in use as they are equipped with electric motors.

Another advantage of the present invention is that the vehicles may also be used by those without a motor vehicle driver's license, by elderly people, and disabled people in general.

A further advantage of the present invention is that each vehicle allows intermediate stops which are independently and selectively decided by the vehicle user.

Still another advantage is that it enables low energy consumption mobility due to the reduced dimensions and weights of the vehicles as well as energy recovery devices during braking.

These and other aims, direct and complementary, are achieved by the new transportation system for people and/or things according to claim 1, which uses electric vehicles that travel constrained to rails.

The new transportation system comprises a rail system and at least one circulating vehicle constrained to the rails.

Each vehicle comprises a structure supported by wheels and is preferably small in size, designed to carry things and/or one or more persons, but preferably up to four or five people. For example, the vehicle is a shuttle, with two seats preferably aligned in the forward direction and, for example, facing each other.

Each vehicle is equipped with control means operable by the user of the vehicle itself, with which he/she can start the vehicle, stop the vehicle, decide the route in correspondence with the exchanges, and activate optionals such as acoustic or light signals.

The vehicle is not driven by the user, since the vehicle is constrained to follow the rail along the required route, which is preferably a closed circuit or "loop". The control means on board the vehicle comprise, for example, and advantageously a "touch screen" by which the user can start and stop the vehicle, choose the route and the stop at which to get off, and activate any optionals. The touch screen can also be used to signal emergencies and provide technical and tourist information to the user.

The vehicles are equipped with speed limiters, to ensure the exact same safety speed for all vehicles. For example, the maximum speed allowed is 10-20 Km/h.

Each vehicle is equipped with a control system by means of which the vehicle itself is automatically slowed down or stopped when approaching an obstacle or a second vehicle or when it encounters a vehicle at a switching point, so as to always ensure the maintenance of a minimum safety distance between vehicles.

This control system includes, for example and advantageously, sensors placed on the front and on the rear of the vehicle, suited to cause the vehicle to stop in the event that an obstacle is detected.

It is also possible for the control system to, in an emergency situation or to perform the retrieval of the vehicle, automatically activate the vehicle, which, without a driver, is returned to a pre-established station.

Each vehicle is preferably equipped with at least one electric drive motor with batteries, which can be advantageously recharged in special charging stations.

At least two of the wheels, or drive wheels, are equipped with their own electric motor.

It is also possible for each of these vehicles to be equipped with a photovoltaic panel, positioned, for example, on the roof of the vehicle, able to produce electricity with which the batteries cab be recharged.

The vehicle is therefore electrically powered autonomously and can also circulate only on the special rails.

In the preferred embodiment, the vehicle comprises four wheels, preferably made of pneumatic rubber which leads to a reduction in noise and vibrations due to the road surface.

The rails are preferably and advantageously formed of modular segments and are completely embedded in the road surface.

The various rail segments are joined together by means of connection and expansion joints, for example made of plastic.

In the preferred embodiment, the system is monorail. Each of the modular segments which comprise the entire rail has a box section, that is, comprising a lower wall or base, two lateral walls, and an upper wall with a longitudinal groove along its overall length.

The inside of this rail defines the guide in which part of at least one guide unit constrained to the vehicle and inserted in the groove slides.

To ensure the stability of the guide unit in the roadway, the rail rests on a beam housed in the roadway, for example and advantageously an IPE type.

Special drain points are also provided for on this rail, for the outflow of any rainwater or wash water that might enter the rail. These drains are suitably connected by means of drainage ducts to collection and removal pits.

These vehicles are therefore constrained to move only along the rails and only in one direction, or forward direction, while circulation in the opposite direction is preferably prevented or permitted only for small sections, for example for manoeuvring and emergency operations.

The circuit along which each vehicle is constrained to circulate is suitably a closed circuit or "loop". The at least one guide unit suited to be partially housed in the guide of the rail through the longitudinal groove made on the rail itself is mounted under the vehicle structure.

In the preferred embodiment, the guide unit and guide unit support or shank are structured and sized so as to slide substantially flush with the side walls of the guide, and possibly, directly or indirectly, against the inner face of the upper guide wall, thus always remaining raised compared to the base of the rail.

In one possible embodiment, the at least one guide unit comprises in turn a support or shank suited to be inserted in the groove, at the end of which at least one main bearing or roller is constrained, with a vertical rotation axis, and suited to slide in a main guide inside the rail. This main guide is advantageously made up of the vertical side walls of the rail.

Preferably, the guide system comprises two of the main bearings or rollers which are placed one on top of the other and which slide in the main guide.

The guide unit may also preferably comprise a secondary bearing or roller, with a vertical rotation axis, suitably placed at a lower level with respect to the main roller and preferably having a rotation axis coinciding with the rotation axis of the main roller.

This secondary roller is suited to slide inside a secondary guide inside the guide, for example made of a pair of vertical partitions facing each other.

This secondary roller is joined to the main roller by an extensible shaft, where in one configuration, for example extended, the secondary roller is placed inside the secondary guide, while in a second configuration, for example contracted, the roller is placed outside of this secondary guide.

The function of said secondary roller and of said extensible shaft is to allow the course of the vehicle to be selected at the level of a set of switching points on the rail.

For example, in the case where the rail divides into two branches with different directions, at the junction, at least one secondary guide may be created inside the guide which continues only in one of the two branches.

By varying the position of the secondary bearing or roller, if it engages in the secondary guide, the vehicle will be guided towards the corresponding branch, otherwise, if the bearing remains outside the secondary guide, the vehicle will be guided towards the other branch.

The configuration of the shaft, which may advantageously comprise an electro-piston, is regulated from inside the vehicle.

Alternatively or in combination with the secondary bearing or roller, a switching point may be mounted at the junction, that is, an element hinged to the rail upstream of the junction and suited to rotate in such a way as to selectively block the opening of one of the two branches of the junction.

In one possible embodiment, the vehicle is also advantageously equipped with a steering system with electromechanical actuators electronically controlled according to the signals concerning the route of the rail to be followed.

In particular, along the rail a plurality of electronic devices may be distributed suited to communicate with the control system on board the vehicle. These electronic devices, which may for example be transmitters or transponders, communicate the route to be followed to the vehicle's electronic system, and that electronic system consequently commands the steering system, according to the curvature of the route to be followed and the current speed of the vehicle.

In the preferred embodiment, these transmitters or transponders are installed inside the rail, and are of the passive type, suited to communicate the data relating to their position when they are queried by a corresponding electronic device or transponder installed on the guide unit. When the vehicle's guide unit passes near the transponder installed in the rail, the rail is queried by the transponder installed on the guide unit and responds with the data relating to its position so that the on-board computer or the control system in the vehicle calculates, depending on the transponder detected, the operations to be performed such as: turning, stopping, slowing down, restarting, etc. The control is in fact to be considered for all intents and purposes of the intelligent type which communicates continuously and in real time the exact position of the vehicle to the vehicle's on-board computer.

The vehicle's guide unit may also comprise at least one brush, also housed inside the groove in a position preferably ahead of the bearings in the forward direction along the rail, this brush being suited to keep the inside of the rail clean.

To limit the risk that the vehicle encounters foreign objects such as debris or stones on the ground along the rail, under the vehicle one or more brushes may be installed, mounted at least at the front of the vehicle, in correspondence with the guide unit, so that any debris close to the rail will be swept away before making contact with the guide unit.

Furthermore between the structure and the guide unit at least one intermediate joint may be mounted, with double hinges and with elastic means where needed, and where, in the case in which the vehicle encounters small obstacles such as stones, holes or debris in general, the joint and the spring allow the obstacle to be overcome, by preventing the bearings from locking.

The guide unit may also comprise one or more internal anti-lifting wheels or rollers, intended to be housed and to slide inside the rail, in a displaced position with respect to the groove, so that the guide unit is prevented from accidentally coming out of the groove.

The internal anti-lifting wheels or rollers are preferably kept sliding against the inner face of the upper wall of the rail, at the sides of the longitudinal opening, by elastic means, such as thrust springs, to ensure the proper positioning of the guide unit with respect to the rail.

To allow the guide unit to be extracted from the rail and consequently release the vehicle from the rail itself, inspection strips equipped with a removable upper plate on the rail itself are provided in order to remove the sliding restraining device of each vehicle.

As an alternative to these inspection strips, the upper wall of the rail may be mounted in a modular and removable way, so as to make the entire rail accessible from above, and thus facilitate any maintenance and/or cleaning interventions.

The various segments of the upper wall are joined by special expansion joints in such a way as to allow the inevitable thermal expansions of the rail.

Moreover, in correspondence with a switching point, the rail comprises a sensor suited to signal to the vehicle the possibility of rerouting from the main route by means of devices on board operated by the user.

The new system is particularly suitable for tourist resorts, parks or tourist villages, in limited or controlled circulation environments, such as car parks or adjacent areas of airports, stadiums, etc., pedestrian areas, hospitals, etc.

The rails can either be on existing roads or cycle paths, or on dedicated roads and thanks to their ground level positioning, without depressions and with only one small groove, they do not constitute an obstacle or risk for other road users, such as pedestrians and cyclists.

The system also preferably and advantageously includes a plurality of charging stations, in which it is possible to electrically connect the batteries present on each vehicle to a recharging unit, also by induction.

The closed circuit or loop in which the vehicles circulate advantageously comprises one or more sidings or spurs from the main closed circuit, to reach the recharging stations or to stop stations, for users to get in/out of the vehicles.

Each vehicle may be selectively configurable for access by a wheelchair as it is free of architectural barriers.

In the preferred embodiment a single rail is provided completely embedded in the sliding plane, where the upper surface of the rail itself is flush with the sliding plane, leaving only a small slot, of dimensions comparable to a slot in a rain water drain, for the sliding of the constraint shank.

In one possible embodiment, the rail of the new transportation system comprises a system for closing the longitudinal groove of the rail by means of movable partitions, so as to achieve the following re sults:
- the introduction of dirt and debris in general inside the rail is prevented or minimized;
- the shank of the guide unit is kept in a vertical position;
- the shank of the guide unit is kept at a distance from the edges of the longitudinal groove, so it does not scrape against the metal material of the rail but rather against the suitable material with which the mobile partitions are made;
- the risk of the accidental introduction of objects or parts of different vehicles circulating on the same road level is prevented or minimized;
- the closure is hermetic, thus creating within the rail a sort of closed conduit that facilitates the washing of the inside of the rail. The adoption of this closure system also prevents the possible or accidental access by hands, fingers, animal paws, and any foreign bodies.

In particular, this closure system comprises at least one or preferably a pair of opposed partitions, arranged longitudinally in proximity to the longitudinal groove of the rail, and where these partitions are maintained by elastic means in a position such as to close the longitudinal groove. These partitions are deformable only in the longitudinal direction, so as to adapt to the passage of the guide unit shank inserted in the rail, and then return to the tight and rest configuration.

These partitions are shaped so as to provide tightness.

These partitions are moreover symmetrically arranged with respect to the longitudinal groove, so as to keep said guide unit shank in a substantially central position in the longitudinal groove, preventing it from scraping against the upper wall of the rail, and in such a way as to maintain the shank in a substantially vertical position while sliding.

The rail is furthermore specially shaped so that the partitions are constrained to only adapt or slide horizontally, while the sliding in a vertical direction is prevented.

The partitions may also be distributed along the entire length of the rail and each partition is joined to the consecutive partition, for example by interlocking or fixing means, preferably in a removable manner.

The characteristics of the new system will be better clarified by the following description with reference to the drawings, attached by way of a non-limiting example.
Figure 1 shows a three-dimensional view of a vehicle (1) in one possible embodiment, sliding on a rail (2).
Figures 2 and 3 respectively show a front view and a side view of the vehicle (1) of Figure 1 sliding on a rail (2).
Figures 2a and 3a respectively show a detailed cross section and longitudinal section of the rail (2) and of the guide unit (3) of the vehicle (1).
Figure 4 shows a detailed cross-section of the rail (2), inside which part of the guide unit (3) is housed, and where the IPE beam (4) on which the rail (2) is resting is also visible.
Figure 5 shows a detailed cross-section of the rail (2), inside which part of the guide unit (3) is housed according to a further embodiment.
Figure 6 is a schematic three-dimensional view of a junction (20) of a rail (2), with a secondary guide (5).
Figure 7 shows a side view of the vehicle (1) on a rail (2), with a brush system (6, 9) to clean debris outside and inside the rail (2).
Figure 7a shows a detail of the guide unit (3) in a further embodiment, with a brush (6) to clean the inside of the rail (2), and anti-slip rollers (7).
Figure 7b shows a top view of the guide unit (3) with anti-slip rollers (7) and sliding rollers (31, 32).
Figure 8 shows a front view of the vehicle (1) on a rail (2) with brushes (9) to clean debris out of the rail (2).

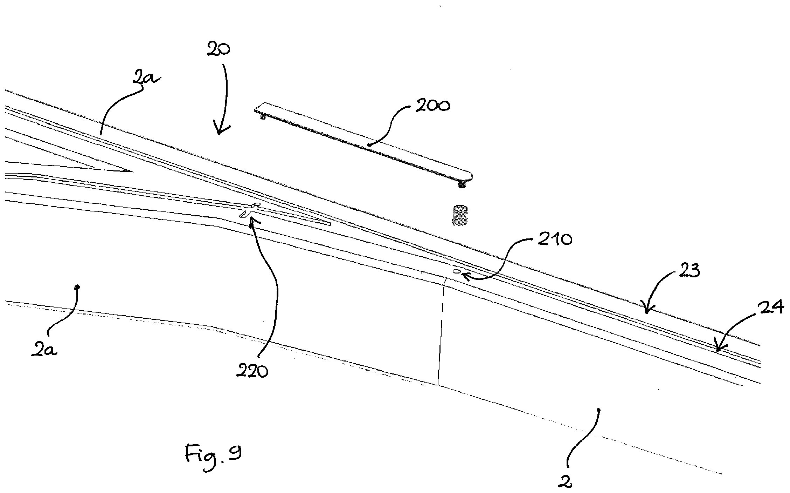

Figure 9 shows a three-dimensional view of a junction (20) of a rail (2), with a switching point (200).
Figure 10 shows a side view of the vehicle (1) in an alternative embodiment, where the rear wheels (82) are the drive wheels, while the front wheels swivel (81).
Figure 11 shows a charging station (10).

The new transportation system comprises a rail system (2) and at least one vehicle (1) circulating on said rails (2).

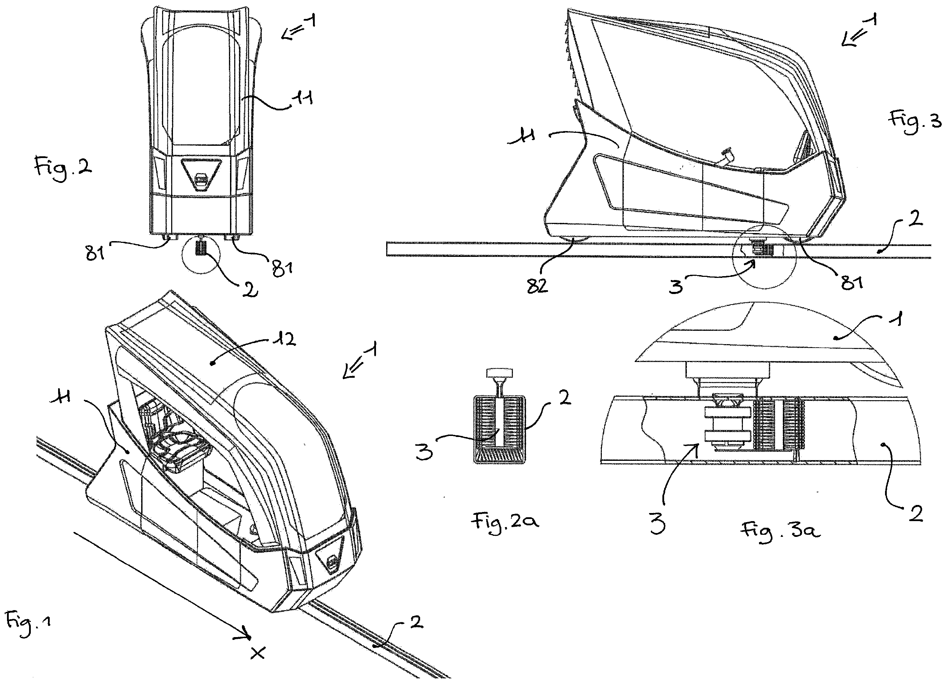

Each vehicle (1), shown for example in Figure 1, comprises a structure (11) supported by wheels (81, 82), for example and preferably four wheels, two of which are front (81) and two rear (82) wheels. In the example in Figure 1, the vehicle (1) is a two-seater shuttle, with the seats preferably aligned in the forward direction (X).

At least two of the wheels, or drive wheels, have their own electric motor, where each wheel is powered independently of the other.

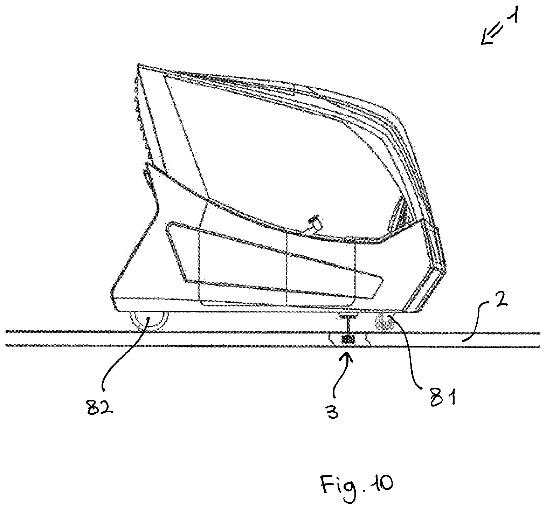

In one possible embodiment, shown in Figure 10, the drive wheels are the rear wheels (82).

Each of the vehicles (1) may also be equipped with a photovoltaic panel (12), positioned for example on the roof of the vehicle, able to produce electrical energy with which to recharge the batteries.

These rails (2) are preferably and suitably made up of modular segments and are completely embedded in the road surface.

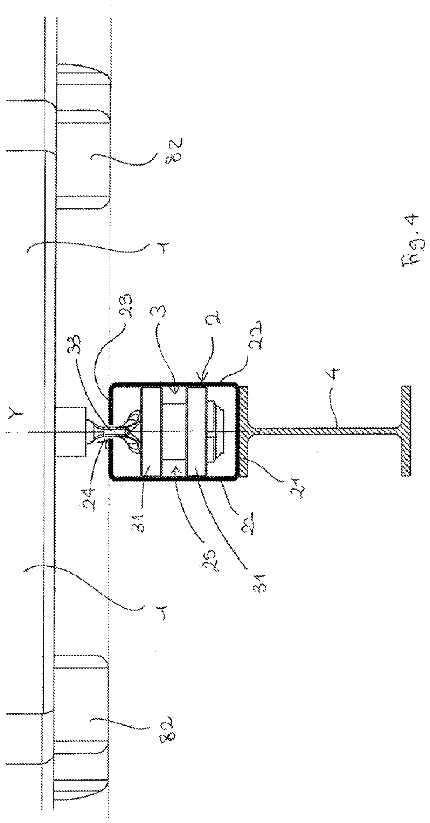

In the preferred embodiment, the system is monorail. Each of the modular segments which comprise the entire rail (2) has a box section, that is, as shown in Figure 4, comprising a lower wall or base (21), two lateral walls (22) opposite each other and an upper wall (23) on which a longitudinal groove (24) is made along its overall length.

The inside of the rail (2) defines the guide (25) in which part of at least one guide unit (3) constrained to the vehicle (1) and inserted in the groove (24) slides.

This guide unit (3) is suitably constrained near the front part of the vehicle (1) for example in a position slightly behind the front wheels (81) of the vehicle (1).

To ensure the stability of the rail (2) in the roadway, it rests on a beam (4) housed in the roadway, for example and advantageously an IPE type.

Below the structure (11) of the vehicle (1), the at least one guide system (3) is mounted, which in turn comprises a support or shank (33) suited to be inserted in the groove (24) of the rail (2).

In the embodiment in Figure 10, the shank (33) is shaped with an enlargement (331) at one end, suitable for sliding inside the rail (2).

In the embodiment in Figures 1 to 7b, the guide system (3) comprises, at the end of the shank (33), at least one main bearing or roller (31), with a vertical rotation axis (Y), suited to slide in a main guide (25) within the rail (2). This main guide is for example made up of the vertical side walls (22) of the rail (2).

Preferably, the guide system (3) comprises two of the main bearings or rollers (31) placed one on top of the other and which slide in the main guide (25).

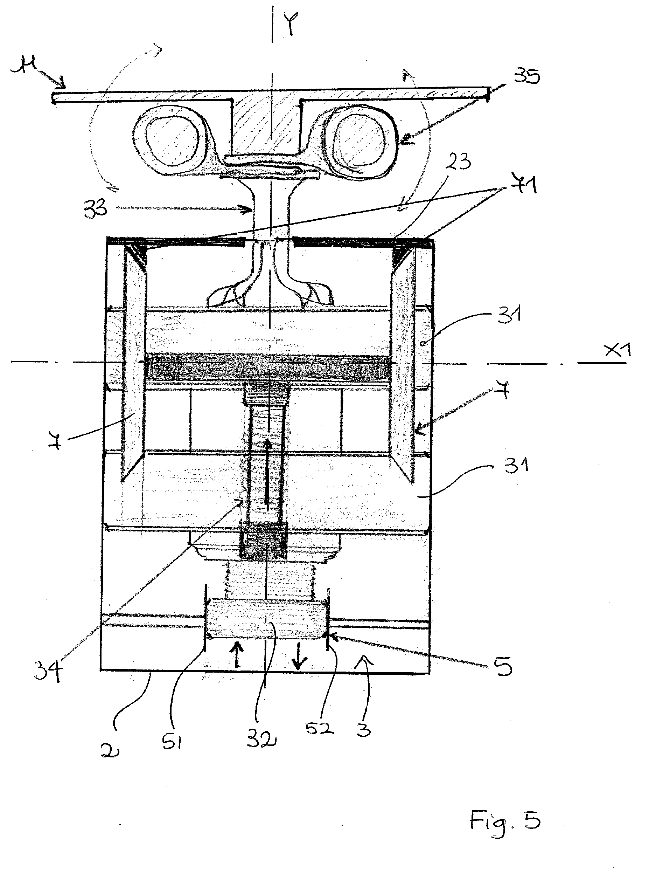

In the embodiment shown in Figure 5, the guide system (3) also preferably comprises a secondary bearing or roller (32), with a vertical rotation axis (Y), suitably placed at a lower level with respect to the main bearing of roller (31) and preferably having an axis of rotation (Y) coinciding with the rotation axis of the main roller (31).

This secondary roller (32) is suited to slide inside a secondary guide (5) inside the rail (2), for example made of a pair of vertical partitions (51, 52) facing each other.

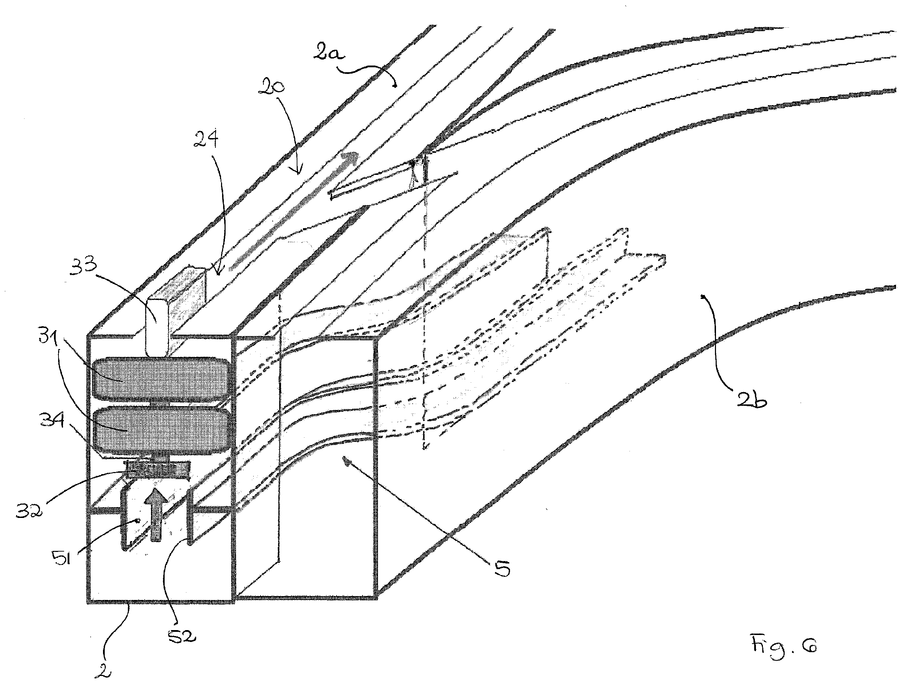

This secondary roller (32) is joined to the main roller (31) and to the shank (33) by means of an extensible shaft (34), where in one configuration, for example extended, shown in Figure 5, the secondary roller (32) is located inside the secondary guide (5), while in a second configuration, for example contracted, shown in Figure 6, the secondary roller (32) is located outside the secondary guide (5).

As shown in Figure 6, in the case in which the rail (2) divides into two branches (2a, 2b), the secondary guide (5) may be constructed at the junction (20) and in one of the two branches (2b), so that, by varying the position of the secondary roller (32), if it engages in the secondary guide (5), the vehicle will be guided towards the corresponding branch (2b), otherwise, if the secondary roller (32) remains outside the secondary guide (5), the vehicle will be guided towards the other branch (2a).

Alternatively or in combination with the secondary bearing or roller (32) slideable in the secondary guide (5), a switching point (200) may be provided for at the junction (20), hinged to the upper part (23) of the rail (2) at a point (210) upstream of the junction (20) and suited to rotate in a guide (220) so as to selectively block the opening of one of the two branches (2a, 2b) of the junction (20).

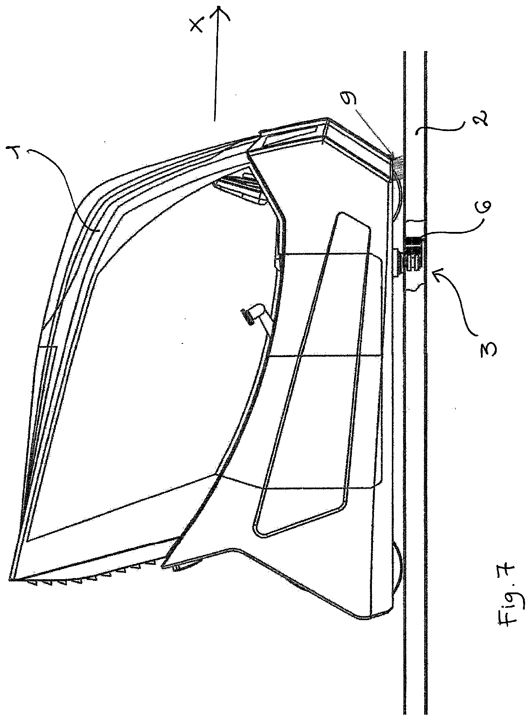

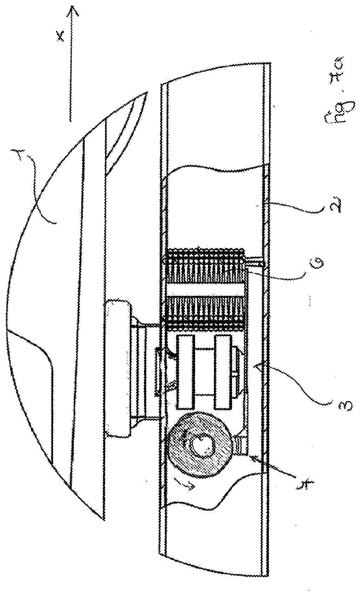

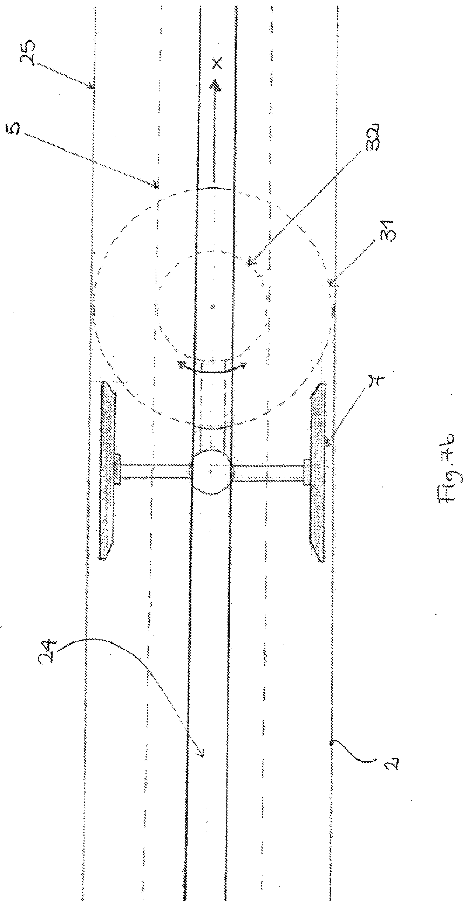

In the embodiment shown in Figures 7 and 7a, the guide system (3) also comprises at least one brush (6), also housed inside the rail (2) in a position in front of the main rollers (31) in the forward direction (X) along the rail (2), this brush (6) being able to keep the inside of the rail (2) clean.

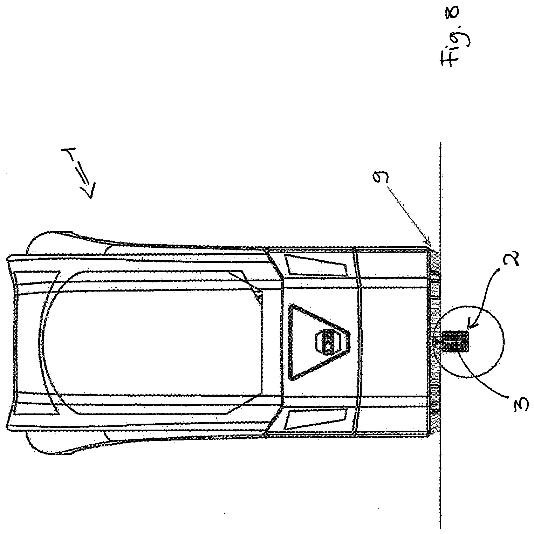

As shown in Figures 7 and 8, the vehicle (1) also comprises one or more brushes (9) mounted on the front part of the vehicle (1), useful for sweeping away any debris close to the rail (2).

Figure 5 also shows how the guide system (3) may be mounted on the structure (11) of the vehicle (1) by means of at least one intermediate joint (35), with a double hinge and elastic means.

The guide system (3) may also comprise one or more internal anti-lift wheels or rollers (7), intended to be housed and to slide inside the rail (2), against the inner face of the upper wall (23) of the rail (2) itself and with a horizontal rotation axis (X1), in an offset position with respect to the groove (24), so that the sliding guide system cannot accidentally come out of the rail (2).

Small teeth (71) may be present on the upper wall (23) of the rail (2) to guide and contain the anti-lift wheels or rollers (7) suited to prevent the guide system from coming off.

The vehicle (1) also includes a steering system, which allows the vehicle (1) to follow the route of the rail (2).

In the embodiment in Figure 10, as noted, the rear wheels (82) are driven, while the front wheels (81) are suitably pivoting, and where along the longitudinal axis of the vehicle (1), in proximity to the front wheels (81) the guide system (3) is mounted, which, sliding inside the rail (2), guides the vehicle's (1) course.

Alternatively, each of the two front wheels (81) may be equipped with a dedicated electric motor and a steering system suited to control the speed of each of the electric motors of the two front drive wheels (81), so as to establish the relative speed between the front wheels (81) themselves.

In particular, along the rail (2) a plurality of electronic devices may be distributed which communicate with the control system or on-board computer of the vehicle (1).

These electronic devices transmit to the control system the data relating to the current position and the route of the rail (2) and, according to the data received, the control system manages the operational parameters of the motors.

For example, the on-board control system of the vehicle (1) changes the absolute and/or relative speed of the drive wheels (81) according to the curvature of the route that the vehicle (1) must follow and according to the current speed of the vehicle (1).

In particular, the electronic devices may be distributed on the rail (2), and advantageously along the rail's curves (2).

In the preferred embodiment, at least one of the electronic devices may be installed on the rail before the beginning of each curve, and is programmed to transmit the data relating to the curve itself, so that the control system, according to the data received from the nth electronic device and the current speed of the vehicle (1), regulates the relative speed of the front drive wheels (81), thus controlling the vehicle's course (1).

The control system, near or at the entrance of a curve, may also regulate the vehicle's (1) forward speed, setting it to a predetermined value to manage the curve.

In the preferred embodiment the route will be a closed circuit type, with possible deviations for recharging and storage points.

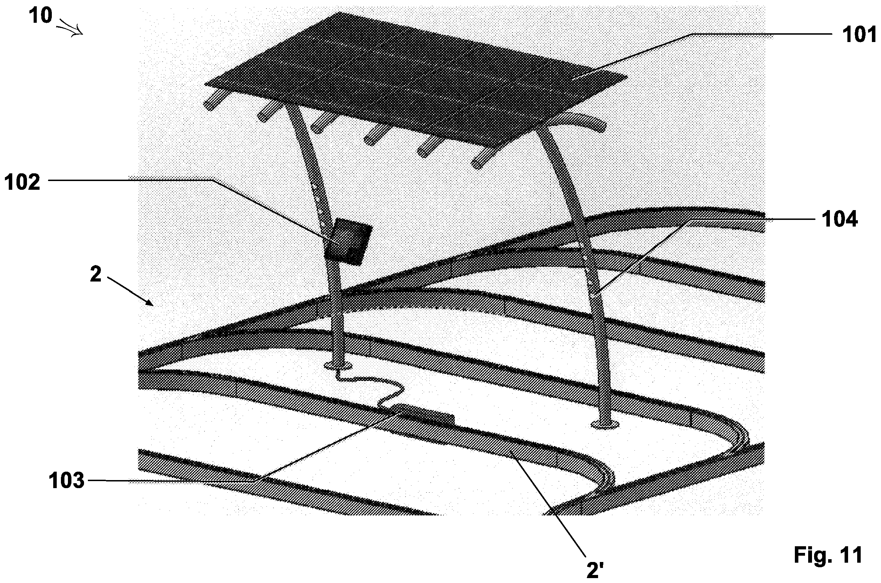

Figure 11 shows a charging station (10) according to one embodiment, where it is shown how the closed main circuit of the rails (2) comprises one or more deviations (2') for the vehicles to go to one or more charging stations (10).

The charging station (10) comprises, for example, one or more photovoltaic panels (101) connected to an induction charging device (103) mounted on the deviation (2'), so as to make electrical contact with the vehicle (1).

The charging station (10) also preferably comprises devices (102) to activate the recharge, which may require for example the payment of the service, as well as any signalling devices (104) or indicators that inform the user about the operating status of the charging station (10).

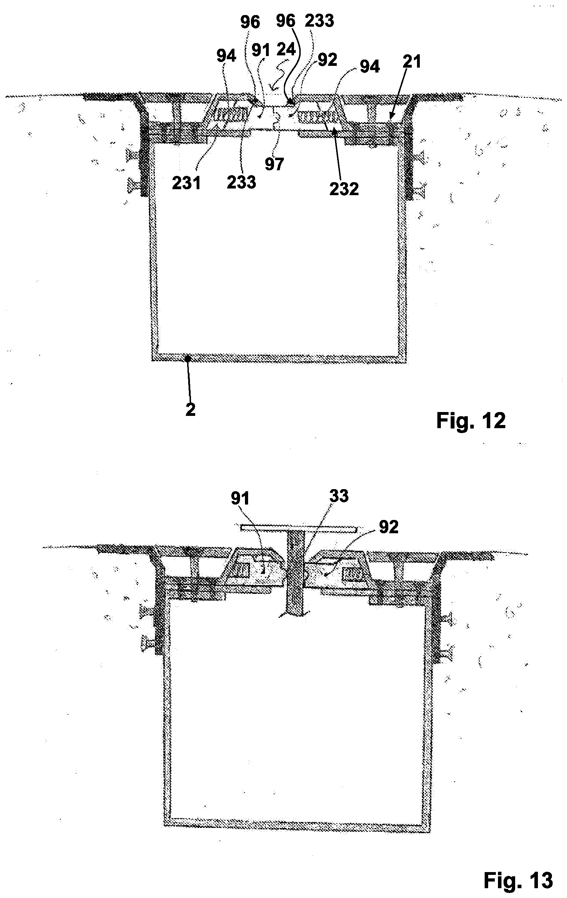

Figures 12 to 21 show a preferred embodiment for making a system to close the longitudinal groove (24) of the rail (2).

In particular, in Figure 12 a cross-section of the rail (2) is shown with closure partitions (91, 92) in a closed configuration, that is, arranged opposite each other so as to hermetically close the groove (24) of the rail (2).

Figure 13 shows the same section of Figure 12 with closure partitions (91, 92) shifted laterally during the passage of the shank (33) of the guide system (3).

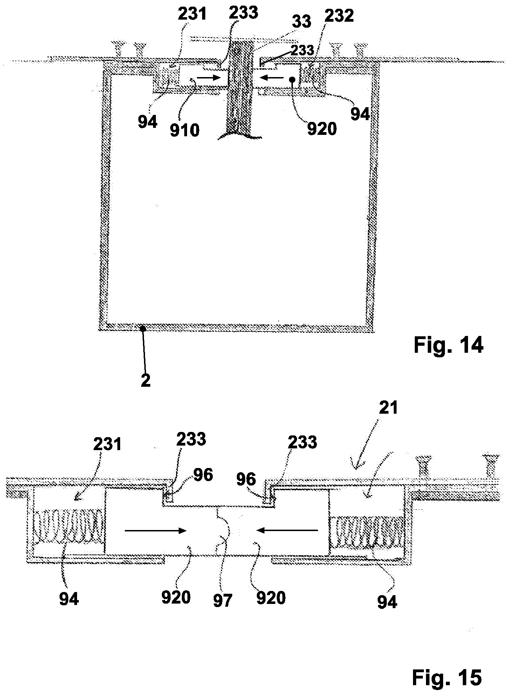

Figure 14 shows a cross section of the rail (2) in an alternative embodiment, with the closure partitions (910, 920) shifted laterally during the passage of the shank (33) of the guide system (3).

Figure 15 shows a detail of the closure partitions (910, 920) in the embodiment in Figure 14, in a closed configuration.

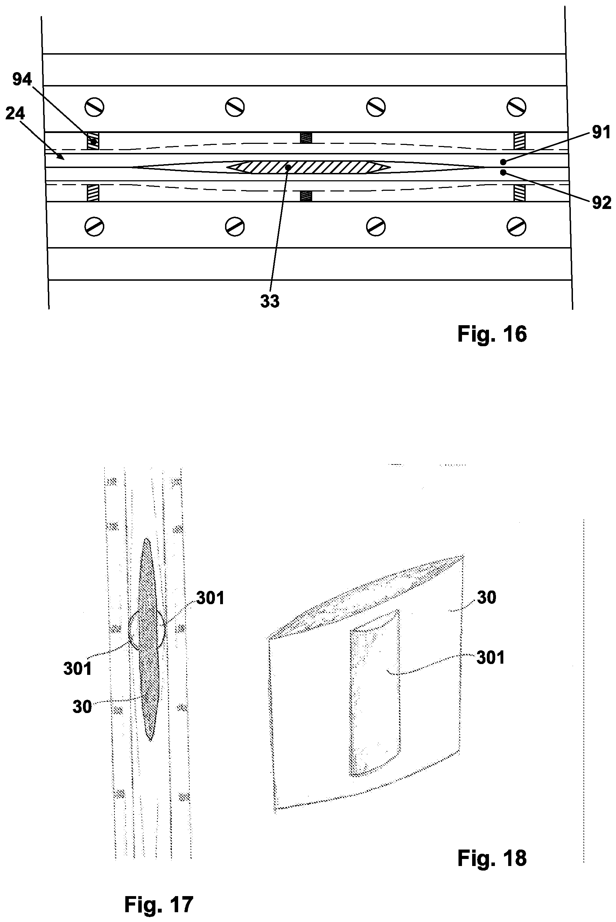

Figure 16 shows a top view of a detail of the rail (2), where the longitudinal groove (24) is visible, the closure partitions (91, 92) shifted outwardly during the passage of the shank (33), shown in section.

Figures 17 and 18 show a sectional and three-dimensional view of the shank (30) in an alternative embodiment, comprising lateral sliding bearings (301).

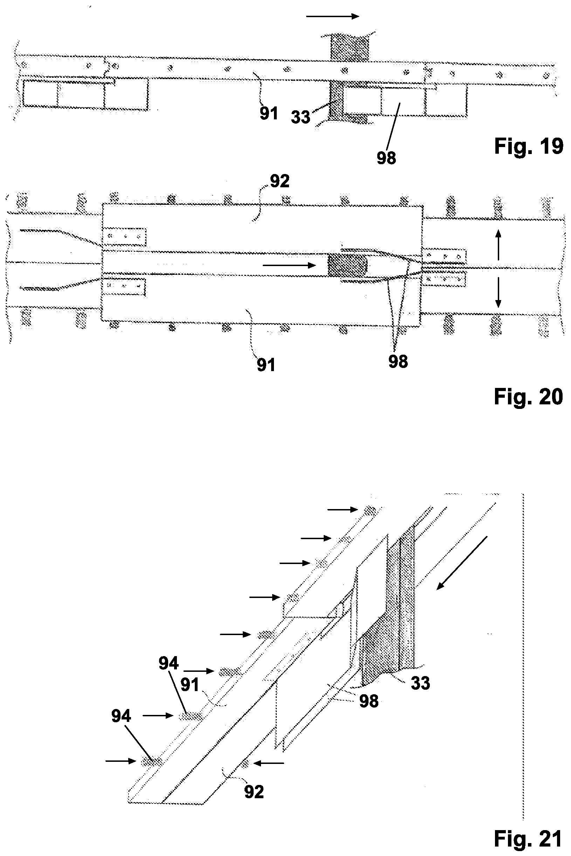

Figures 19, 20 and 21 respectively show a side view, a plan view and a three-dimensional view from below of the closure partitions system (91, 92), where it is possible to foresee the installation of a pair of shaped flanges or walls (98), specularly arranged between the two closure partitions (91, 92) and serving as a tapered slot for the sliding of the shank (33) between two consecutive pairs of closure partitions (91, 92), in order to avoid the risk of the shank (33) being blocked.

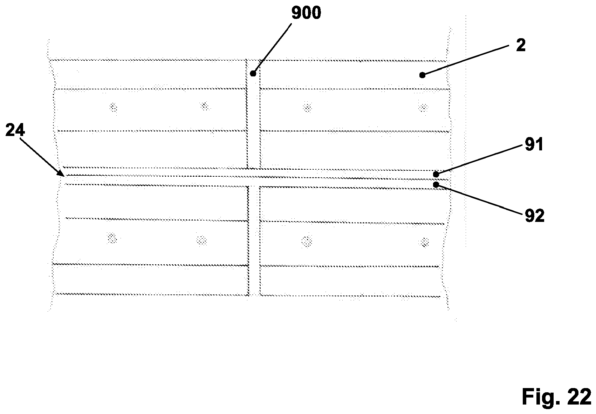

Figure 22 shows a top view of the rail, with closing partitions (91, 92) and expansion joints (900).

The rail (2) of the new transportation system comprises a closure system for the longitudinal groove (24) of the rail (2).

This closure system comprises at least one or preferably, as shown in the figures, a pair of opposing closure partitions (91, 92), arranged longitudinally in proximity to the longitudinal groove (24) of the rail, and where the closing partitions (91, 92) are maintained by elastic means (94) in a position such as to close the longitudinal groove.

In the embodiment with two partitions (91, 92), the elastic means (94) keep the opposing partitions (91, 92) against one another, so as to hermetically seal the groove (24).

These closure partitions are adaptable and moveable only in a horizontal and transverse direction with respect to the length of the rail (2) and the longitudinal groove (24), so as to deform outwardly during the passage of the guide system's shank (33) inserted in the rail (2) as shown in Figure 13 and then return to the closed position.

The partitions may be formed, for example, with edges (97) shaped in such a way as to create a hermetic seal when pressed against each other, as shown in Figure 12.

These closure partitions (91, 92) are moreover symmetrically arranged with respect to the longitudinal groove (24), so as to keep the shank (33) of the guide system (3) in a substantially central position in the longitudinal groove (24), preventing it from scraping against the upper wall (23) of the rail (2).

Moreover, the presence of these closing partitions (91, 92) keeps the shank (33) in a substantially vertical position while sliding.

In the embodiment shown in Figures 12 and 13, the upper wall (23) of the rail (2) is made up of two opposing seats (231, 232) where the closure partitions (91, 92) are constrained to move only laterally between the closed configuration (Figure 12) and the shifted open configuration (Figure 13). The vertical displacement of the partitions (91, 92) is prevented.

Between the walls of the seats (231, 232) and the partitions (91, 92) the elastic means (94) to push the partitions (91, 92) against each other are also interposed.

These seats (231, 232) are defined by walls comprising at least one small tooth (233) facing downwards to serve as a block for the sliding of each partition (91, 92) towards the opposite partition, wherein the partitions (91, 92) are correspondingly shaped with a recess (96) suited to come into contact with the small tooth (233) of the relative sliding seat (231, 232).

In the embodiment shown in Figure 15, the seats (231, 232) are shaped differently, but the essential concept does not change.

The partitions (91, 92), with a modular length, may be distributed along the entire rail (2) and each partition may be joined to the following partition, for example by means of interlocking or fixing means, preferably in a removable manner.

Alternatively, the embodiment may comprise flanges serving as a tapered slot (98) shown in Figures 19, 20 and 21.

Therefore, with reference to the preceding description and the attached drawings the following claims are made.

## Claims

1. Transportation system for people and/or things, comprising a system constituted by guideways or rails (2) and at least one vehicle (1) suited to transport one or more persons and/or things and constrained so that it moves on said rails (2), said vehicle (1) comprising a structure (11) supported by wheels (81, 82) wherein:
• said at least one vehicle comprises one or more drive wheels (81, 82);
• said rail system (2) is a monorail type, wherein said rail (2) is made up of modular segments joined together and completely recessed in the road surface, and wherein each one of the modular segments that make up said rail (2) has the shape of a box, comprising a lower side or base (21), two lateral walls (22) and an upper side (23) on which a longitudinal groove (24) is provided, and wherein the inside of said rail (2) defines the guide (25) in which a part of at least one guide system (3) constrained to said vehicle (1) slides;
• under the structure (11) of said vehicle (1) there is said at least one guide system (3) suited to be partially housed in said guide (25) of the rail (2) through said longitudinal groove (24), and wherein said at least one guide system (3) in turn comprises a support or shank (33) suited to be inserted through said groove (24), the end of said shank (33) being constrained to an element suited to slide in said main guide (25) located inside the rail (2),
and where said road surface is a road or a cycle path or a dedicated road, and where said rail (2) is positioned in said flat road surface, without depressions, **characterised in that** each of the drive wheels (81, 82) is connected to an electric motor, and at least one battery suited to supply power to said electric motor; wherein said vehicle (1) comprises two drive wheels (82) and two pivoting wheels (81), and where said guide system (3) is mounted below the vehicle (1), in correspondence with the longitudinal central axis of the vehicle (1),
and wherein said system comprises a closing system of said longitudinal groove (24) of the rail (2), where said closing system in turn comprises at least one or preferably a pair of opposite closure partitions (91, 92), arranged longitudinally in the vicinity of said longitudinal groove (24) of the rail, and where elastic means (94) keep said closure partitions (91, 92) counterposed one against the other, so as to hermetically seal the groove (24) and counteract the deformation and lateral displacement of said closure partitions (91, 92) upon the passage of said shank (33) of the guide system (3) which slides in the rail (2), and where said closure partitions (91, 92) can only be deformed horizontally and transversally with respect to the length of the rail (2) and the longitudinal groove (24).

2. System according to claim 1, **characterized in that** said closure partitions (91, 92) are formed with edges (97) shaped so as to provide a hermetic seal when pressed against each other.

3. System according to claim 1, **characterized in that** said closure partitions (91, 92) are symmetrically arranged with respect to said longitudinal groove (24), so as to maintain said shank (33) of the guide system (3) in a substantially central position in the longitudinal groove (24), preventing it from sliding against the upper wall (23) of the rail (2) and so as to maintain said shank (33) in a substantially vertical position during sliding.

4. System, according to claim 1, **characterized in that** said upper wall (23) of the rail (2) is formed with two opposing seats (231, 232) wherein said closure partitions (91, 92) are constrained to move only laterally and wherein between the walls of said opposing seats (231, 232) and said closure partitions (91, 92) said counterposing elastic means (94) are interposed and suited to push said closure partitions (91, 92) against each other.

5. System, according to claim 4, **characterized in that** said seats (231, 232) are defined by walls comprising at least one small tooth (233) facing downwards to act as a stopper for the sliding of each closure partition (91, 92) towards the opposing closure partition, wherein said closure partitions (91, 92) are accordingly shaped with a recess (96) suited to come in contact with said small tooth (233) of the relative sliding seat (231, 232).

6. System according to claim 1, **characterized in that** said closure partitions (91, 92) have a modular length and are distributed along said rail (2) and where each closure partition (91, 92) is joined to the consecutive closure partition in a removable manner.

7. System according to claim 1, **characterized in that** it comprises a pair of shaped flanges or walls (98), specularly arranged between the two closure partitions (91, 92) and serving as a tapered slot for the sliding of the shank (33) between two consecutive pairs of closure partitions (91, 92).

8. System according to one of the preceding claims, **characterized in that** said guide system (3) comprises at least one main bearing or roller (31) mounted at the end of said shank (33) and having a vertical rotation axis (Y), said main roller (31) being suited to slide in said main guide (25) located inside the rail (2) and wherein said guide system (3) is mounted on the structure (11) of the vehicle (1) by means of at least one intermediate joint (35), with a double hinge and possibly elastic means.

9. System according to one of the preceding claims, **characterized in that** said vehicle (1) comprises control means suited to be operated by the user of the vehicle itself, wherein said control means are suited to start the vehicle, stop the vehicle and define its route at the level of the switching points, while said vehicle is constrained so that it moves following said rails, and wherein said rails are arranged in such a way as to form a closed main circuit or loop, and wherein said vehicle (1) comprises at least one speed limiting device connected to each of said electric motors of said drive wheels (81, 82), and wherein said vehicle (1) comprises sensors positioned at the front and at the back and suited to cause the vehicle to stop or slow down in the case where the presence of an obstacle within a given distance is detected.

10. System according to claim 8, **characterized in that** said guide system (3) also comprises a secondary bearing or roller (32) having a vertical rotation axis (Y) and positioned at a lower level compared to said main roller (31), said secondary roller (32) being suited to slide inside a secondary guide (5) located inside said rail (2), and wherein said secondary roller (32) is joined to said main roller (31) and/or to said shank (33) by means of an extensible shaft (34), wherein in an extended configuration said secondary roller (32) is positioned inside said secondary guide (5), while in a second withdrawn configuration said secondary roller (32) is positioned outside of said secondary guide (5), and wherein said rail (2) comprises at least one junction (20) with two branches (2a, 2b), wherein one of said branches comprises said secondary guide (5), in such a way that by selectively varying the position of said secondary roller (32) it is possible to make said guide system (3) selectively follow said branch equipped with said secondary guide (5) or the other branch.

11. System, according to claim 10, **characterized in that**, at the level of a junction, said rail (2) comprises a sensor suited to signal that the vehicle can be deviated from the main route or circuit through selection devices operated by the user on board.

12. System, according to any of the claims from 1 to 11, **characterized in that** said vehicle (1) comprises two front drive wheels (81), each of which is connected to its own independent electric motor, and wherein said guide system (3) is mounted under the vehicle (1), at the level of the centre longitudinal axis of the vehicle itself (1), in proximity to said front drive wheels (81).

13. System, according to any of the claims from 1 to 11, **characterized in that** said vehicle (1) comprises two rear drive wheels (82), each of which is connected to its own independent electric motor, while the front wheels (81) are pivoting.

14. System, according to claim 12 or 13, **characterized in that** it comprises a plurality of electronic devices installed in said rail (2) and suited to transmit the data related to the current position to said control system of said at least one vehicle (1), and wherein said control system located on the vehicle (1) modifies the operating parameters of the motors of said front or rear drive wheels (81, 82) according to said data received and to the current speed of the vehicle.

15. System according to one or more of the preceding claims, **characterized in that** said guide system (3) also comprises one or more internal wheels or rollers (7) suited to prevent the guide system (3) from coming off and to be housed and slide inside the rail (2), against the upper side (23) of the rail (2) itself and with a horizontal rotation axis (XI), in an offset position with respect to said groove (24), so that the guide system cannot accidentally come out of the inside of the rail (2) and wherein said system comprises small teeth (71) mounted on said upper wall (23) of the rail (2), which serve as guide and containment elements during the sliding movement of said rollers (7) suited to prevent the guide system (3) from coming off.

## Patentansprüche

1. Transportsystem für Personen und/oder Sachen, ein System umfassend, das aus Führungen oder Schienen (2) und wenigstens einem Fahrzeug (1) besteht, dazu geeignet, eine oder mehrere Personen und/oder Sachen zu befördern, und derart fixiert, dass es sich auf den besagten Schienen (2) bewegt, wobei das besagte Fahrzeug (1) eine auf Rädern (81, 82) stehende Struktur (11) umfasst, wobei:
• das besagte wenigstens eine Fahrzeug ein oder mehrere Antriebsräder (81, 82) umfasst;
• das besagte Schienensystem (2) ein Einschienentyp ist, wobei die besagte Schiene (2) aus modularen, miteinander verbundenen und vollständig in die Straßendecke eingelassenen Segmenten besteht, und wobei jedes der modularen Segmente, die die besagte Schiene (2) bilden, die Form eines Kastens aufweist, eine Unterseite oder Basis (21), zwei Seitenwände (22) sowie eine Oberseite (23) umfassend, an welcher sich eine Längsrille (24) befindet, und wobei das Innere der besagten Schiene (2) die Führung (25) definiert, in der ein Teil wenigstens eines an dem besagten Fahrzeug (1) fixierten Leitsystems (3) gleitet;
• sich unter der Struktur (11) des besagten Fahrzeugs (1) das besagte wenigstens eine Leitsystem (3) befindet, dazu geeignet, durch die besagte Längsrille (24) teilweise in der besagten Führung (25) der Schiene (2) aufgenommen zu werden, und wobei das besagte wenigstens eine Leitsystem (3) seinerseits eine Halterung oder einen Schaft (33) umfasst, dazu geeignet, durch die besagte Rille (24) eingesetzt zu werden, wobei das Ende des besagten Schafts (33) an einem Element fixiert ist, das dazu geeignet ist, in der besagten, innerhalb der Schiene (2) befindlichen Hauptführung (25) zu gleiten,
und wobei die besagte Straßendecke eine Straße oder ein Fahrradweg oder eine zweckspezifische Straße ist, und wobei die besagte Schiene (2) ohne Vertiefungen in der besagten, flachen Straßendecke positioniert ist, **dadurch gekennzeichnet, dass** jedes der Antriebsräder (81, 82) mit einem Elektromotor und mit wenigstens einer Batterie verbunden ist, welche geeignet ist, den besagten Elektromotor mit Strom zu versorgen; wobei das besagte Fahrzeug (1) zwei Antriebsräder (82) und zwei Schwenkräder (81) umfasst, und wobei das besagte Leitsystem (3) der Mittel-Längsachse des Fahrzeugs (1) entsprechend unter dem Fahrzeug (1) montiert ist,
und wobei das besagte System ein System zur Schließung der besagten Längsrille (24) der Schiene (2) umfasst, wobei das besagte Schließsystem seinerseits wenigstens eine oder vorzugsweise ein Paar einander entgegengesetzter Schließwände (91, 92) umfasst, die in Längsrichtung nahe der besagten Längsrille (24) der Schiene angeordnet sind, und wobei elastische Mittel (94) die besagten Schließwände (91, 92) einander entgegengesetzt halten, um die Rille (24) hermetisch abzudichten und der Verformung sowie der seitlichen Verschiebung der besagten Schließwände (91, 92) beim Passieren des besagten Schafts (33) des in der Schiene (2) gleitenden Leitsystems (3) entgegenzuwirken, und wobei die besagten Schließwände (91, 92) bezüglich der Länge der Schiene (2) und der Längsrille (24) lediglich waagerecht und quer verformt werden können.

2. System nach Patentanspruch 1, **dadurch gekennzeichnet, dass** die besagten Schließwände (91, 92) mit derart geformten Kanten (97) ausgeführt sind, dass sie aneinandergedrückt eine hermetische Abdichtung bewirken.

3. System nach Patentanspruch 1, **dadurch gekennzeichnet, dass** die besagten Schließwände (91, 92) symmetrisch zu der besagten Längsrille (24) angeordnet sind, so dass der besagte Schaft (33) des Leitsystems (3) in einer im Wesentlichen zentralen Position in der Längsrille (24) gehalten wird und sein Abgleiten gegen die obere Wand (23) der Schiene (2) vermieden wird, und so, dass der besagte Schaft (33) während des Gleitens in einer im Wesentlichen senkrechten Position gehalten wird.

4. System nach Patentanspruch 1, **dadurch gekennzeichnet, dass** die besagte obere Wand (23) der Schiene (2) mit zwei entgegengesetzten Aufnahmen (231, 232) geformt ist, wobei die besagten Schließwände (91, 92) forciert werden, sich nur seitlich zu bewegen, und wobei zwischen den Wänden der besagten, einander entgegengesetzten Aufnahmen (231, 232) und den besagten Schließwänden (91, 92) die besagten, entgegenwirkenden elastischen Mittel (94) eingefügt und dazu geeignet sind, die besagten Schließwände (91, 92) gegeneinander zu drücken.

5. System nach Patentanspruch 4, **dadurch gekennzeichnet, dass** die besagten Aufnahmen (231, 232) durch Wände definiert sind, die wenigstens ein nach unten gerichtetes Zähnchen (233) umfassen, welches als Endanschlag für das Gleiten jeder Schließwand (91, 92) zur entgegengesetzten Schließwand hin dient, wobei die besagten Schließwände (91, 92) entsprechend mit einer Aussparung (96) geformt sind, die dazu geeignet ist, mit dem besagten Zähnchen (233) der entsprechenden Gleitaufnahme (231, 232) in Kontakt zu kommen.

6. System nach Patentanspruch 1, **dadurch gekennzeichnet, dass** die besagten Schließwände (91, 92) eine modulare Länge aufweisen und an der besagten Schiene (2) entlang verteilt sind, und wobei jede Schließwand (91, 92) abnehmbar mit der folgenden Schließwand verbunden ist.

7. System nach Patentanspruch 1, **dadurch gekennzeichnet, dass** es ein Paar geformter Flansche oder Wände (98) umfasst, die spiegelbildlich zwischen den zwei Schließwänden (91, 92) angeordnet sind und als sich verjüngender Schlitz für das Gleiten des Schafts (33) zwischen zwei aufeinanderfolgenden Paaren Schließwände (91, 92) dienen.

8. System nach einem jeden der vorstehenden Patentansprüche, **dadurch gekennzeichnet, dass** das besagte Leitsystem (3) wenigstens ein Hauptlager oder eine Hauptrolle (31) umfasst, am Ende des besagten Schafts (33) montiert und mit einer senkrechten Drehachse (Y), wobei die besagte Hauptrolle (31) dazu geeignet ist, in der besagten innerhalb der Schiene (2) befindlichen Hauptführung (25) zu gleiten und wobei das besagte Leitsystem (3) mittels wenigstens einer Zwischenverbindung (35) mit einem Doppelscharnier und möglichst elastischen Mitteln an der Struktur (11) des Fahrzeugs (1) montiert ist.

9. System (1) nach einem jeden der vorstehenden Patentansprüche, **dadurch gekennzeichnet, dass** das besagte Fahrzeug (1) Steuerungsmittel umfasst, die dazu geeignet sind, durch den Benutzer des Fahrzeugs selbst bedient zu werden, wobei die besagten Steuerungsmittel dazu geeignet sind, das Fahrzeug zu starten, anzuhalten und seine Strecke auf Ebene der Weichen zu definieren, während das besagte Fahrzeug so fixiert ist, dass es den besagten Schienen folgt, und wobei die besagten Schienen derart angeordnet sind, dass sie einen geschlossenen Hauptkreis bzw. eine Schleife bilden, und wobei das besagte Fahrzeug (1) wenigstens eine Vorrichtung zur Geschwindigkeitsbegrenzung umfasst, die an jeden der besagten Elektromotoren der besagten Antriebsräder (81, 82) angeschlossen ist, und wobei das besagte Fahrzeug (1) vorn und hinten positionierte Sensoren umfasst, die dazu geeignet sind, bei Feststellung eines Hindernisses innerhalb eines gegebenen Abstands das Fahrzeug anzuhalten oder zu verlangsamen.

10. System nach Patentanspruch 8, **dadurch gekennzeichnet, dass** das besagte Leitsystem (3) des Weiteren ein sekundäres Lager oder eine sekundäre Rolle (32) mit einer senkrechten Drehachse (Y) umfasst, das/die auf einer im Vergleich zur Hauptrolle (31) niedrigeren Ebene positioniert ist, wobei die besagte sekundäre Rolle (32) dazu geeignet ist, innerhalb einer in der besagten Schiene (2) befindlichen, sekundären Führung (5) zu gleiten, und wobei die besagte sekundäre Rolle (32) durch eine ausziehbare Welle (34) mit der besagten Hauptrolle (31) und/oder mit dem besagten Schaft (33) verbunden ist, wobei die besagte sekundäre Rolle (32) in einer erweiterten Konfiguration innerhalb der besagten sekundären Führung (5) positioniert ist, während in einer zweiten, zurückgezogenen Konfiguration die besagte sekundäre Rolle (32) außerhalb der besagten sekundären Führung (5) positioniert ist, und wobei die besagte Schiene (2) wenigstens einen Übergang (20) mit zwei Abschnitten (2a, 2b) umfasst, wobei einer der besagten Abschnitte die besagte sekundäre Führung (5) umfasst, derart, dass es bei wahlweiser Änderung der Position der besagten sekundären Rolle (32) möglich ist, das besagte Leitsystem (3) wahlweise dem besagten, mit der besagten sekundären Führung (5) versehenen Abschnitt oder dem anderen Abschnitt folgen zu lassen.

11. System nach Patentanspruch 10, **dadurch gekennzeichnet, dass** die besagte Schiene (2) auf Ebene eines Übergangs einen Sensor umfasst, der dazu geeignet ist anzuzeigen, dass das Fahrzeug von der Hauptstrecke oder dem Hauptkreis durch vom Bediener an Bord betätigte Wahlvorrichtungen umgelenkt werden kann.

12. System nach einem jeglichen der Patentansprüche von 1 bis 11, **dadurch gekennzeichnet, dass** das besagte Fahrzeug (1) zwei vordere Antriebsräder (81) umfasst, von denen jedes mit seinem eigenen, unabhängigen Elektromotor verbunden ist, und wobei das besagte Leitsystem (3) unter dem Fahrzeug (1) montiert ist, auf Ebene der Mittel-Längsachse des Fahrzeugs (1) selbst, in der Nähe der besagten vorderen Antriebsräder (81).

13. System nach einem jeglichen der Patentansprüche von 1 bis 11, **dadurch gekennzeichnet, dass** das besagte Fahrzeug (1) zwei hintere Antriebsräder (82) umfasst, von denen jedes mit seinem eigenen, unabhängigen Elektromotor verbunden ist, während die Vorderräder (81) schwenkbar sind.

14. System nach Patentanspruch 12 oder 13, **dadurch gekennzeichnet, dass** es eine Vielzahl von in der besagten Schiene (2) installierten, elektronischen Vorrichtungen umfasst, die dazu geeignet sind, Daten zur aktuellen Position an das besagte Steuerungssystem des besagten wenigstens einen Fahrzeugs (1) zu übermitteln, und wobei das besagte, am Fahrzeug (1) positionierte Steuerungssystem die Betriebsparameter der Motoren der besagten vorderen oder hinteren Antriebsräder (81, 82) den besagten, empfangenen Daten und der laufenden Geschwindigkeit des Fahrzeugs entsprechend verändert.

15. System nach einem oder mehreren der vorstehenden Patentansprüche, **dadurch gekennzeichnet, dass** das besagte Leitsystem (3) des Weiteren ein(e) oder mehrere Räder oder Rollen (7) umfasst, die dazu geeignet sind, das Ablösen des Leitsystems (3) zu vermeiden und innerhalb der Schiene (2) aufgenommen zu werden und zu gleiten, gegen die Oberseite (23) der Schiene (2) selbst und mit einer waagerechten Drehachse (XI), in einer bezüglich der besagten Rille (24) versetzten Position, so dass das Leitsystem sich nicht versehentlich aus dem Inneren der Schiene (2) abheben kann, und wobei das besagte System an der besagten oberen Wand (23) der Schiene (2) montierte Zähnchen (71) umfasst, als Führungs- und Halteelemente während der Gleitbewegung der besagten Rollen (7), die das Ablösen des Leitsystems (3) vermeiden.

## Revendications

1. Système de transport pour personnes et/ou choses, comprenant un système constitué de guidages ou rails (2) et au moins un véhicule (1) apte à transporter une ou plusieurs personnes et/ou choses et bloqué de manière à ce qu'il se déplace sur lesdits rails (2), ledit véhicule (1) comprenant une structure (11) supportée par des roues (81, 82) où :
• ledit au moins un véhicule comprend une ou plusieurs roues motrices (81, 82) ;
• ledit système de rail (2) est du type monorail, où ledit rail (2) est réalisé de segments modulaires unis ensemble et complètement enfoncés dans une surface routière, et où chacun des segments modulaires qui constituent ledit rail (2) présente la forme d'une boîte, comprenant un côté inférieur ou base (21), deux parois latérales (22) et un côté supérieur (23) sur lequel est prévue une rainure longitudinale (24), et où l'intérieur dudit rail (2) définit le guide (25) dans lequel une partie d'au moins un système de guidage (3) bloqué audit véhicule (1) coulisse ;
• au-dessous de la structure (11) dudit véhicule (1) se trouve ledit au moins un système de guidage (3) indiqué pour être partiellement logé dans ledit guide (25) du rail (2) à travers ladite rainure longitudinale (24), et où ledit au moins un système de guidage (3) comprend à son tour un support ou tige (33) indiqué pour être inséré à travers ladite rainure (24), l'extrémité de ladite tige (33) étant bloquée à un élément indiqué pour coulisser dans ledit guide principal (25) disposé à l'intérieur du rail (2),
et où ladite surface routière est une roue ou une piste cyclable ou une route dédiée, et où ledit rail (2) est positionné dans ladite surface routière plate, sans dépressions, **caractérisé en ce que** chacune des roues motrices (81, 82) est reliée à un moteur électrique, et au moins une batterie indiquée pour fournir énergie audit moteur électrique ;
où ledit véhicule (1) comprend deux roues motrices (82) et deux roues pivotantes (81), et où ledit système de guidage (3) est monté au-dessous du véhicule (1), à hauteur de l'axe centrale longitudinal du véhicule (1),
et où ledit système comprend un système de fermeture de ladite rainure longitudinale (24) du rail (2), où ledit système de fermeture comprend à son tour une ou préférablement un couple de cloisons de fermeture opposées (91, 92) disposées de manière longitudinale près de ladite cavité longitudinale (24) du rail, et où les moyens élastiques (94) maintiennent lesdites cloisons de fermeture (91, 92) opposées l'une contre l'autre, de manière à fermer hermétiquement la cavité (24) et opposer la déformation et le déplacement latéral desdites cloisons de fermeture (91, 92) au passage de ladite tige (33) du système de guidage (3) qui coulisse sur le rail (2), et où lesdites cloisons de fermeture (91, 92) ne peuvent qu'être déformées horizontalement et transversalement par rapport à la longueur du rail (2) et à la la rainure longitudinale (24).

2. Système selon la revendication 1, **caractérisé en ce que** lesdites cloisons de fermeture (91, 92) sont formées avec des bords (97) galbés de manière à prévoir une fermeture hermétique quand ils sont appuyés l'un contre l'autre.

3. Système selon la revendication 1, **caractérisé en ce que** lesdites cloisons de fermeture (91, 92) sont disposées symétriquement par rapport à ladite rainure longitudinale (24), de manière à maintenir ladite tige (33) dudit système de guidage (3) dans une position essentiellement centrale dans la rainure longitudinale (24), empêchant ainsi de la faire coulisser contre la paroi supérieure (23) du rail (2) et de manière à maintenir ladite tige (33) dans une position essentiellement verticale durant le coulissement.

4. Système selon la revendication 1, **caractérisé en ce que** ladite paroi supérieure (23) du rail (2) est formé de deux sièges opposés (231, 232) où lesdites cloisons de fermeture (91, 92) sont bloquées pour se déplacer uniquement latéralement et où entre les parois desdits sièges opposés (231, 232) et lesdites cloisons de fermeture (91, 92) lesdits moyens élastiques de contraste (94) sont interposés et indiqués pour pousser lesdites cloisons de fermeture (91, 92) l'une contre l'autre.

5. Système selon la revendication 4, **caractérisé en ce que** lesdits sièges (231, 232) sont définis par des parois comprenant au moins une petite dent (233) tournée vers le bas pour agir en tant qu'un fin de course pour le coulissement de chaque cloison de fermeture (91, 92) vers la cloison de fermeture opposée, où lesdites cloisons de fermeture (91, 92) sont galbées par conséquent avec une cavité (96) indiquée pour entrer en contact avec ladite petite dent (233) du siège de coulissement correspondant (231, 232).

6. Système selon la revendication 1, **caractérisé en ce que** lesdites cloisons de fermeture (91, 92) présentent une longueur modulaire et sont distribuées le long dudit rail (2) et où chaque cloison de fermeture (91, 92) est reliée à la cloison de fermeture consécutive d'une manière amovible.

7. Système selon la revendication 1, **caractérisé en ce qu'**il comprend un couple de brides ou parois galbées (98), disposées de manière spéculaire entre les deux cloisons de fermeture (91, 92) et servant en tant que fente conique pour le coulissement de la tige (33) entre deux couples de cloisons de fermeture consécutives (91, 92).

8. Système selon l'une quelconque des revendications précédentes, **caractérisé en ce que** ledit système de guidage (3) comprend au moins un palier ou rouleau principal (31) monté sur l'extrémité de ladite tige (33) et ayant un axe de rotation vertical (Y), ledit rouleau principal (31) étant indiqué pour coulisser dans ledit guide principal (25) positionné à l'intérieur du rail (2) et où ledit système de guidage (3) est monté sur la structure (11) du véhicule (1) au moyen d'au moins un joint intermédiaire (35), avec une charnière double et des moyens possiblement élastiques.

9. Système selon l'une des revendications précédentes, **caractérisé en ce que** ledit véhicule (1) comprend des moyens de contrôle indiqués pour être actionnés par l'utilisateur du véhicule, où lesdits moyens de contrôle sont indiqués pour démarrer le véhicule, arrêter le véhicule et définir son parcours à hauteur des points de commutation, alors que ledit véhicule est bloqué de manière à ce qu'il se déplace en suivant lesdits rails, et où lesdits rails sont disposés de manière à former un circuit principal fermé ou anneau, et où ledit véhicule (1) comprend au moins un dispositif limiteur de vitesse relié à chacun desdits moteurs électriques desdites roues motrices (81, 82), et où ledit véhicule (1) comprend des capteurs positionnés sur la partie avant et sur la partie arrière et sont indiqués pour faire en sorte que le véhicule s'arrête ou ralentisse au cas où on détecterait la présence d'un obstacle à une certaine distance .

10. Système selon la revendication 8, **caractérisé en ce que** ledit système de guidage (3) comprend également un palier ou rouleau secondaire (32) ayant un axe de rotation vertical (Y) et positionné à un niveau inférieur par rapport audit rouleau principal (31), ledit rouleau secondaire (32) étant indiqué pour coulisser à l'intérieur d'un guide secondaire (5) positionné à l'intérieur dudit rail (2), et où ledit rouleau secondaire (32) est relié audit rouleau principal (31) et/ou à ladite tige (33) au moyen d'un arbre extensible (34), où, dans une configuration étendue, ledit rouleau secondaire (32) est positionné à l'intérieur dudit guide secondaire (5), alors que, dans une configuration retirée, ledit rouleau secondaire (32) est positionné à l'extérieur dudit guide secondaire (5), et où ledit rail (2) comprend au moins une jonction (20) avec deux sections (2a, 2b), où une desdites sections comprend ledit guide secondaire (5), de manière à ce qu'en variant sélectivement la position dudit rouleau secondaire (32) il est possible de faire en sorte que ledit système de guidage (3) suive sélectivement ladite section dotée dudit guide secondaire (5) ou l'autre section.

11. Système selon la revendication 10, **caractérisé en ce qu'**à niveau d'une jonction, ledit rail (2) comprend un capteur indiqué pour signaler que le véhicule peut être dévié dudit parcours ou circuit principal à travers des dispositifs de sélection actionnés par l'utilisateur à bord.

12. Système selon l'une quelconque des revendications de 1 à 11, **caractérisé en ce que** ledit véhicule (1) comprend deux roues motrices avant (81), chacune desquelles est reliée à son moteur électrique indépendant, et où ledit système de guidage (3) est monté au-dessous du véhicule (1), à hauteur de l'axe longitudinal central du véhicule (1) même, à proximité desdites roues motrices (81).

13. Système selon l'une quelconque des revendications de 1 à 11, **caractérisé en ce que** ledit véhicule (1) comprend deux roues motrices (82), chacune desquelles est reliée à son moteur électrique indépendant, alors que les roues avant (81) sont pivotantes.

14. Système selon la revendication 12 ou 13, **caractérisé en ce qu'**il comprend une pluralité de dispositifs électroniques installés sur ledit rail (2) et indiqués pour transmettre les données relatives à la position actuelle audit système de contrôle dudit au moins un véhicule (1), et où ledit système d contrôle positionné sur le véhicule (1) modifie les paramètres de fonctionnement des moteurs desdites roues motrices avant ou arrière (81, 82) selon lesdites données reçues et la vitesse actuelle du véhicule.

15. Système selon une ou plusieurs des revendications précédentes, **caractérisé en ce que** ledit système de guidage (3) comprend également une ou plusieurs roues ou rouleaux internes (7) indiqués pour empêcher que ledit système de guidage (3) se détache et pour être logés à l'intérieur du rail (2) et coulisser dans celui-ci, contre le côté supérieur (23) du rail (2) même et avec un axe de rotation horizontal (X1), dans une position décalée par rapport à ladite rainure (24), de manière à ce que le système de guidage ne puisse pas sortir accidentellement de l'intérieur du rail (2) et où ledit système comprend de petites dents (71) montées sur ladite paroi supérieure (23) du rail (2), qui sert en tant que guide et qu'éléments de confinement durant le mouvement de coulissement desdits rouleaux (7) indiqués pour empêcher que le système de guidage (3) puisse se détacher.
